# EUROPEAN PATENT APPLICATION

(11) **EP 4 390 260 A1**
(43) Date of publication of application: **26.06.2024**
(21) Application number: 21954148.9
(22) Date of filing: 17.08.2021
(51) Int. Cl.: F24F 11/74, F24F 11/86, F24F 110/10

(54) **AIR CONDITIONING DEVICE**

(71) Applicant: MITSUBISHI ELECTRIC CORPORATION, Chiyoda-ku Tokyo 100-8310 (JP)
(72) Inventor: ITO, Shinichi, Tokyo 100-8310 (JP)
(74) Representative: Pfenning, Meinig & Partner mbB
(86) International application number: PCT/JP2021/030009
(87) International publication number: WO 2023/021574

(57) **Abstract**

An air-conditioning apparatus includes an indoor unit being arranged in an air-conditioned space and including an indoor heat exchanger and an indoor fan sending air to the indoor heat exchanger, an outdoor unit including a compressor, an indoor temperature sensor configured to detect a temperature of the air-conditioned space, and a controller configured to perform control to increase or decrease a compressor frequency of the compressor at a control width based on a difference between an indoor temperature detected by the indoor temperature sensor and a set temperature, and, when the compressor frequency exceeds a set frequency that has been set in advance, perform a normal operation in which the compressor is controlled by causing the control width to be a first control width. The controller is configured to perform, when the compressor frequency is equal to or smaller than the set frequency and a rotation speed of the indoor fan exceeds a set rotation speed that has been set in advance, a low performance operation in which the compressor is controlled by causing the control width to be a second control width that is smaller than the first control width, and, when the compressor frequency is equal to or smaller than the set frequency and the rotation speed of the indoor fan is equal to or smaller than the set rotation speed, a low-air-flow and low-performance operation in which the compressor is controlled by causing the control width to be a third control width that is smaller than the second control width.

## Description

### Technical Field

The present disclosure relates to an air-conditioning apparatus that controls the temperature of a space such as a living space.

### Background Art

In recent years, the airtightness and the heat insulation performance of housing have improved. For this reason, there have been increasing cases where the amount of heat entering an indoor space from the outdoor decreases and thus less heat processing capacity is required for air-conditioning apparatuses. More specifically, the number of cases where a load of an air-conditioning apparatus decreases and thus the air-conditioning apparatus operates with half or less than half the rated capacity is increased.

For the frequency of a compressor in an air-conditioning apparatus, the lower limit frequency is specified to secure reliability of the compressor. When a load of the air-conditioning apparatus is small, the capacity of the air-conditioning apparatus is too large for the load even when the compressor is driven at the lower limit frequency, causing a repetition of starting and stopping of the compressor. When starting and stopping of the compressor occurs frequently, the indoor temperature fluctuates, causing a reduction in comfort. In addition, at starting of the compressor, refrigerant in an unstable state causes a reduction in the efficiency of the refrigeration cycle. Consequently, a repetition of starting and stopping of the compressor leads to an increase in the power consumption.

As a conventional technology of air-conditioning control for reducing a repetition of starting and stopping of a compressor, there is a technique of reducing a control width of the compressor frequency when the indoor temperature approaches a set temperature (see, for example, Patent Literature 1). In addition, there is a technique of reducing a control width of the compressor frequency during a low performance period in which the air-conditioning apparatus is operating with half or less than half the rated capacity (see, for example, Patent Literature 2).

### Citation List

### Patent Literature

Patent Literature 1: Japanese Unexamined Patent Application Publication No. 2006-275460
Patent Literature 2: Japanese Unexamined Patent Application Publication No. 2002-115923

### Summary of Invention

### Technical Problem

In Patent Literature 1, by reducing a control width of the compressor frequency when the indoor temperature approaches a set temperature, an overshoot is prevented and the controllability is thus improved. However, such improvement of the controllability can be obtained only when the air-conditioning capacity is stable and operation is performed at a relatively high compressor frequency. During a low-performance period in which operation is performed at a relatively low compressor frequency, the rate of change in the air-conditioning capacity per 1 Hz of the compressor frequency is larger than that during a period when operation is performed at a relatively high compressor frequency. Consequently, in Patent Literature 1, there is a problem that an overshoot may occur during the low performance period, causing a reduction in the controllability.

Furthermore, in Patent Literature 2, by reducing a control width of the compressor frequency during a low performance period in which the compressor frequency is relatively low, the controllability during the low performance period is improved. However, because an actual air-conditioning apparatus is greatly influenced by the shape and the airflow speed of the indoor unit, the control described in Patent Literature 2 does not always obtain an intended controllability, and leaves room for further improvement.

More specifically, when an indoor unit, such as a wall-mounted type indoor unit of a typical household use room air-conditioner, having an air inlet and an air outlet arranged close to each other is used and the amount of air discharged from the air outlet is small, short cycling is likely to occur. Short cycling is a phenomenon in which air blown out from an air outlet returns to an air inlet. When such short cycling occurs, a suction temperature sensor installed near the air inlet mistakenly detects the temperature of the blown out air, instead of the suction air, as the indoor temperature. This false detection triggers starting and stopping motions of the compressor, causing an increase in power consumption.

The present disclosure has been made to solve the problems described above, and has an object to provide an air-conditioning apparatus that can both increase the controllability and reduce power consumption during the low performance period. Solution to Problem

An air-conditioning apparatus according to an embodiment of the present disclosure includes an indoor unit being arranged in an air-conditioned space and including an indoor heat exchanger and an indoor fan sending air to the indoor heat exchanger, an outdoor unit including a compressor, an indoor temperature sensor configured to detect a temperature of the air-conditioned space, and a controller configured to perform control to increase or decrease a compressor frequency of the compressor at a control width based on a difference between an indoor temperature detected by the indoor temperature sensor and a set temperature, and, when the compressor frequency exceeds a set frequency that has been set in advance, perform a normal operation in which the compressor is controlled by causing the control width to be a first control width. The controller is configured to perform, when the compressor frequency is equal to or smaller than the set frequency and a rotation speed of the indoor fan exceeds a set rotation speed that has been set in advance, a low performance operation in which the compressor is controlled by causing the control width to be a second control width that is smaller than the first control width, and, when the compressor frequency is equal to or smaller than the set frequency and the rotation speed of the indoor fan is equal to or smaller than the set rotation speed, a low-air-flow and low-performance operation in which the compressor is controlled by causing the control width to be a third control width that is smaller than the second control width. Advantageous Effects of Invention

According to the air-conditioning apparatus according to an embodiment of the present disclosure, during a low-performance and low-air-flow period, which is a low performance period in which the compressor frequency is equal to or smaller than the set frequency and in which the rotation speed of the indoor fan is equal to or smaller than the set rotation speed, the low-air-flow and low-performance operation is performed in which the control width of the compressor frequency is made smaller than that of the low performance period. Thus, the air-conditioning apparatus can both improve the controllability and reduce the power consumption during the low performance period.

### Brief Description of Drawings

[Fig. 1] Fig. 1 is a schematic configuration diagram of an air-conditioning apparatus according to Embodiment 1.
[Fig. 2] Fig. 2 is a control block diagram of the air-conditioning apparatus according to Embodiment 1.
[Fig. 3] Fig. 3 is a diagram illustrating operation in a cooling operation of the air-conditioning apparatus according to Embodiment 1.
[Fig. 4] Fig. 4 is a psychrometric chart illustrating changes in air state in a cooling operation of the air-conditioning apparatus according to Embodiment 1.
[Fig. 5] Fig. 5 is a diagram illustrating operation in a heating operation of the air-conditioning apparatus according to Embodiment 1.
[Fig. 6] Fig. 6 is a psychrometric chart illustrating changes in air state in a heating operation of the air-conditioning apparatus according to Embodiment 1.
[Fig. 7] Fig. 7 is a diagram for explaining an effect of a low performance operation in the air-conditioning apparatus according to Embodiment 1.
[Fig. 8] Fig. 8 is a diagram for explaining short cycling.
[Fig. 9] Fig. 9 is a diagram for explaining an effect of a low-air-flow and low-performance operation in the air-conditioning apparatus according to Embodiment 1.
[Fig. 10] Fig. 10 is a flowchart illustrating transition from a normal operation to a low performance operation or a low-air-flow and low-performance operation in the air-conditioning apparatus according to Embodiment 1.
[Fig. 11] Fig. 11 is a diagram illustrating a relationship between air-conditioning capacity and equipment efficiency according to a fan rotation speed.
[Fig. 12] Fig. 12 is a diagram illustrating a schematic configuration of a modified example 1 of the air-conditioning apparatus according to Embodiment 1.
[Fig. 13] Fig. 13 is a diagram illustrating a schematic configuration of a modified example 2 of the air-conditioning apparatus according to Embodiment 1.
[Fig. 14] Fig. 14 is a diagram for explaining an effect of a low-air-flow and low-performance operation in the air-conditioning apparatus according to Embodiment 2. Description of Embodiments

Embodiments of the present disclosure will now be described with reference to the drawings. In the drawings, the same or corresponding components are denoted by the same reference signs, and their descriptions will be omitted or simplified as appropriate. In addition, the shape, the size, and the arrangement of the configuration illustrated in each of the drawings may be changed, as appropriate, within the scope of the present disclosure.

### Embodiment 1

### (Configuration of Air-Conditioning Apparatus)

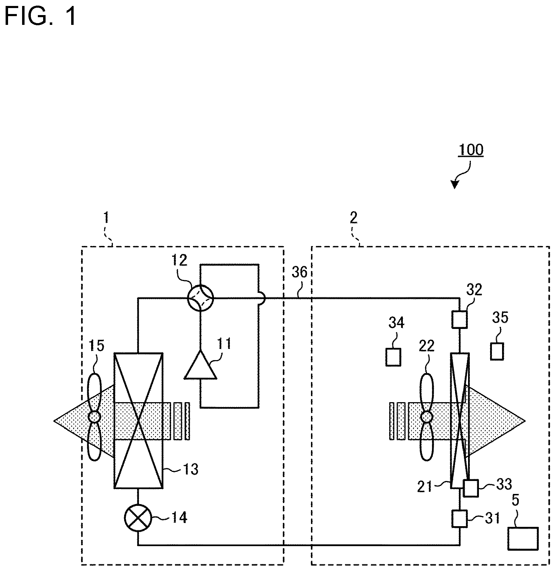

Fig. 1 is a schematic configuration diagram of an air-conditioning apparatus 100 according to Embodiment 1. As shown in Fig. 1, the air-conditioning apparatus 100 of Embodiment 1 includes an outdoor unit 1 arranged outside an air-conditioned space, and an indoor unit 2 arranged in the air-conditioned space. The outdoor unit 1 and the indoor unit 2 are connected to each other by a pipe 36. In addition, the outdoor unit 1 and the indoor unit 2 are connected to each other by wiring (not shown), such as a power supply line or a signal line. The outdoor unit 1 includes a compressor 11, a flow switching valve 12, an outdoor heat exchanger 13, an expansion valve 14, and an outdoor fan 15. The indoor unit 2 includes an indoor heat exchanger 21, an indoor fan 22, a first temperature sensor 31, a second temperature sensor 32, a third temperature sensor 33, an suction temperature sensor 34 as an indoor temperature sensor, a blowout temperature sensor 35, and a controller 5.

The compressor 11, the flow switching valve 12, the outdoor heat exchanger 13, the expansion valve 14, and the indoor heat exchanger 21 are connected by the pipe 36 to form a refrigerant circuit. Refrigerant that circulates in the refrigerant circuit of the air-conditioning apparatus 100 is, for example, a natural refrigerant, such as carbon dioxide, carbon hydride, or helium, a refrigerant that does not contain chlorine, such as HFC41 0A or HFC407C, or a fluorocarbon refrigerant, such as R22 or R134a.

The compressor 11 is a fluid machine configured to suck and compress the refrigerant in a low-pressure gas state and discharge the refrigerant in a high-pressure gas state. Various types of compressors, such as a reciprocating compressor, a rotary compressor, and a screw compressor, are used as the compressor 11. The operation frequency of the compressor 11 is controlled by the controller 5.

The flow switching valve 12 is a four-way valve configured to switch between a cooling operation in which the outdoor heat exchanger 13 functions as a condenser and a heating operation in which the outdoor heat exchanger 13 functions as an evaporator. In the cooling operation, the flow switching valve 12 is switched as shown by the solid lines in Fig. 1 so that the refrigerant discharged from the compressor 11 flows into the outdoor heat exchanger 13. In the heating operation, the flow switching valve 12 is switched as shown by the broken lines in Fig. 1 so that the refrigerant discharged from the compressor 11 flows into the indoor heat exchanger 21.

The outdoor heat exchanger 13 is, for example, a plate-fin-tube type heat exchanger, and is configured to exchange heat between the refrigerant flowing inside a circular pipe or a flat tube and the air supplied by the outdoor fan 15. The outdoor heat exchanger 13 is arranged between the flow switching valve 12 and the expansion valve 14. The outdoor heat exchanger 13 functions as an evaporator in the heating operation and functions as a condenser in the cooling operation.

The expansion valve 14 is a valve configured to reduce the pressure of the refrigerant. The expansion valve 14 is an electronic expansion valve capable of adjusting the opening degree by the controller 5. The expansion valve 14 is arranged between the outdoor heat exchanger 13 and the indoor heat exchanger 21. Note that although the expansion valve 14 is arranged in the outdoor unit 1 in Fig. 1, the expansion valve 14 may be arranged in the indoor unit 2.

The outdoor fan 15 is configured to suck air outside the air-conditioned space, cause the air to pass through the outdoor heat exchanger 13, and blow out the air into the outside of the air-conditioned space. The outdoor fan 15 is, for example, a propeller fan, a sirocco fan, or a cross flow fan that is driven by a motor. The air volume of the outdoor fan 15 is controlled by controlling the rotation speed of the outdoor fan 15 by the controller 5. When the motor of the outdoor fan 15 is a direct current (DC) motor, the controller 5 changes the current value to control the rotation speed, thereby controlling the air volume of the outdoor fan 15. In addition, when the motor of the outdoor fan 15 is an alternating current (AC) motor, the controller 5 changes the power supply frequency by inverter control to control the rotation speed, thereby controlling the air volume of the outdoor fan 15.

The indoor heat exchanger 21 is, for example, a plate-fin-tube type heat exchanger, and is configured to exchange heat between the refrigerant flowing inside a circular pipe or a flat tube and the air supplied by the indoor fan 22. The indoor heat exchanger 21 is arranged between the expansion valve 14 and the flow switching valve 12. The indoor heat exchanger 21 functions as a condenser in the heating operation and functions as an evaporator in the cooling operation.

The indoor fan 22 is configured to suck air in the air-conditioned space and send the air to the indoor heat exchanger 21. The air sent to the indoor heat exchanger 21 is blown into the air-conditioned space. The indoor fan 22 is, for example, a propeller fan, a sirocco fan, or a cross flow fan that is driven by a motor. The air volume of the indoor fan 22 is controlled by controlling the rotation speed of the indoor fan 22 by the controller 5. When the motor of the indoor fan 22 is a DC motor, the controller 5 changes the current value to control the rotation speed, thereby controlling the air volume of the indoor fan 22. In addition, when the motor of the indoor fan 22 is an AC motor, the controller 5 changes the power supply frequency by inverter control to control the rotation speed, thereby controlling the air volume of the indoor fan 22.

Note that although, in Fig. 1, a single indoor fan 22 is arranged upstream of the indoor heat exchanger 21 in the flow of air indicated by the arrow in the drawing, the arrangement and the number of the indoor fans 22 are not limited to the example of Fig. 1 as long as a target air volume is obtained. For example, the indoor fan 22 may be arranged downstream of the indoor heat exchanger 21, or a plurality of the indoor fans 22 may be arranged both upstream and downstream of the indoor heat exchanger 21.

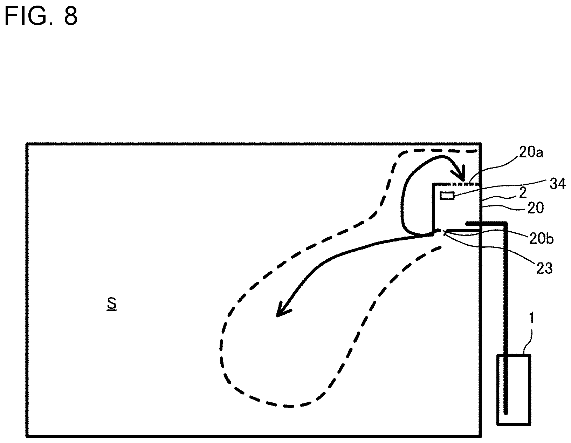

The indoor unit 2 is an indoor unit that is configured to be installed on a wall or the ceiling of an air-conditioned space. A housing 20 (see Fig. 8, which will be described later) of the indoor unit 2 is provided with an air inlet 20a and an air outlet 20b. With the indoor fan 22, air in an air-conditioned space S (see Fig. 8. which will be described later) is sucked from the air inlet 20a, cooled or heated by the indoor heat exchanger 21, and then blown out from the air outlet 20b into the air-conditioned space S.

The first temperature sensor 31 is provided on the pipe connecting between the indoor heat exchanger 21 and the expansion valve 14. The first temperature sensor 31 is configured to detect the temperature of the refrigerant on the inlet side of the indoor heat exchanger 21 in the cooling operation and detect the temperature of the refrigerant on the outlet side of the indoor heat exchanger 21 in the heating operation. The second temperature sensor 32 is provided on the pipe connecting between the indoor heat exchanger 21 and the flow switching valve 12, and is configured to detect the temperature of the refrigerant on the outlet side of the indoor heat exchanger 21 in the cooling operation. The third temperature sensor 33 is provided on the indoor heat exchanger 21, and is configured to detect the temperature of the refrigerant flowing in the indoor heat exchanger 21. Temperatures of the refrigerant detected by the first temperature sensor 31, the second temperature sensor 32, and the third temperature sensor 33 are transmitted to the controller 5.

The suction temperature sensor 34 is arranged near the air inlet 20a, and is configured to detect the temperature of the air sucked into the indoor unit 2 from the air-conditioned space S. A suction temperature detected by the suction temperature sensor 34 is transmitted to the controller 5. Note that the suction temperature is the temperature of the air-conditioned space S, that is, the indoor temperature. In other words, the suction temperature sensor 34 detects the indoor temperature. The blowout temperature sensor 35 is arranged near the air outlet 20b, and is configured to detect the temperature of the air blown out from the indoor unit 2 into the air-conditioned space S. A blowout temperature detected by the blowout temperature sensor 35 is transmitted to the controller 5.

The controller 5 is formed by a microcomputer including a CPU, a ROM, a RAM, an I/O port, and a similar device. The controller 5 is configured to control overall operations of the air-conditioning apparatus 100 based on instructions input from a user via a remote controller or a similar device and detection results of the first temperature sensor 31, the second temperature sensor 32, the third temperature sensor 33, the suction temperature sensor 34, and the blowout temperature sensor 35. Note that although, in Fig. 1, the controller 5 is provided at the indoor unit 2, the controller 5 may be provided at the outdoor unit 1. Alternatively, controllers 5 may be provided individually for the outdoor unit 1 and the indoor unit 2, and may be configured to communicate with each other.

### (Operation of Air-Conditioning Apparatus)

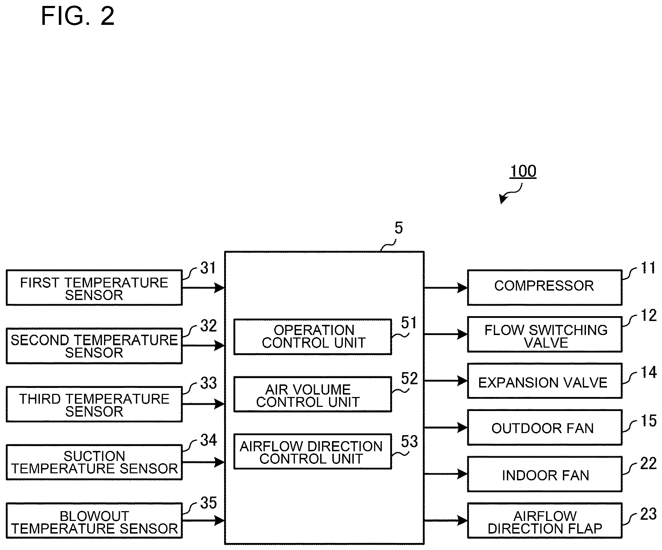

Fig. 2 is a control block diagram of the air-conditioning apparatus 100 according to Embodiment 1. As shown in Fig. 2, the controller 5 of the air-conditioning apparatus 100 has, as functional units, an operation control unit 51, an air volume control unit 52, and an airflow direction control unit 53. Each of the functional units is achieved by the controller 5 by executing a program, or achieved by a dedicated processing circuit.

The operation control unit 51 is configured to execute the cooling operation and the heating operation based on setting information input via the remote controller or a similar device and detection results of the first temperature sensor 31, the second temperature sensor 32, the third temperature sensor 33, the suction temperature sensor 34, and the blowout temperature sensor 35. Examples of the setting information to be input include information on which of the operations, the cooling operation and the heating operation, is performed, air volume, and set temperature. For air volume setting, the air volume can be set not only by selecting from the several levels but also by selecting "automatic" setting. The operation control unit 51 is configured to control the compressor frequency, switching of the flow switching valve 12, the opening degree of the expansion valve 14, and the rotation speed of the outdoor fan 15 based on the setting information and the detection results of the temperature sensors.

The operation control unit 51 is configured to, during a compressor operation, the cooling operation, or the heating operation, select and perform the normal operation, the low performance operation, or the low-air-flow and low-performance operation based on the conditions described later. In addition, the operation control unit 51 is configured to perform thermo-off and thermo-on. The thermo-off is a control to stop the compressor 11 when the suction temperature, as the indoor temperature, reaches a thermo-off threshold. The thermo-on is a control to resume driving of the compressor 11 when the suction temperature reaches a thermo-on threshold.

In the case of performing any one of the normal operation, the low performance operation, and the low-air-flow and low-performance operation, the operation control unit 51 is configured to control the compressor frequency and the opening degree of the expansion valve 14 so that the suction temperature detected by the suction temperature sensor 34 reaches the set temperature set via the remote controller or a similar device. The operation control unit 51 is configured to, in the normal operation, determine a first control width ΔFn of the compressor frequency based on a temperature difference ΔT between the suction temperature and the set temperature and control the compressor 11 by increasing or decreasing the compressor frequency by the determined first control width ΔFn. The low performance operation and the low-air-flow and low-performance operation will be described again later.

The air volume control unit 52 is configured to control the air volume of the indoor fan 22 based on the setting information input via the remote controller or a similar device or the suction temperature detected by the suction temperature sensor 34. The air volume control unit 52 is configured to, in the normal operation, control the rotation speed of the indoor fan 22 so that the air volume of the indoor fan 22 reaches the air volume set by a user via the remote controller or a similar device, or an air volume (for example, the maximum air volume) that has been set in advance. The airflow direction control unit 53 is configured to control an airflow direction flap 23 provided at the air outlet 20b (see Fig. 8, which will be described later).

### (Cooling Operation)

Now, the operation of the air-conditioning apparatus 100 in the cooling operation is described. First, in the cooling operation, the refrigerant that has been compressed by the compressor 11 and thus enters a high-temperature, high-pressure gas state flows into the outdoor heat exchanger 13 functioning as a condenser. The refrigerant in a high-temperature, high-pressure gas state enters a liquid phase in the outdoor heat exchanger 13 and heats the air passing through the outdoor heat exchanger 13. Then, the pressure of the refrigerant is reduced by the expansion valve 14 whose opening degree is set small, and thus the refrigerant enters a two-phase state in which the refrigerant in a low-temperature, low-pressure liquid state and the refrigerant in a gas state are mixed. Then, the refrigerant flows into the indoor heat exchanger 21 functioning as an evaporator. In the indoor heat exchanger 21, the refrigerant in a liquid state enters a gas phase and cools the air passing through the indoor heat exchanger 21. Then, the refrigerant flows into the compressor 11, and is compressed to a high-temperature, high-pressure gas state again.

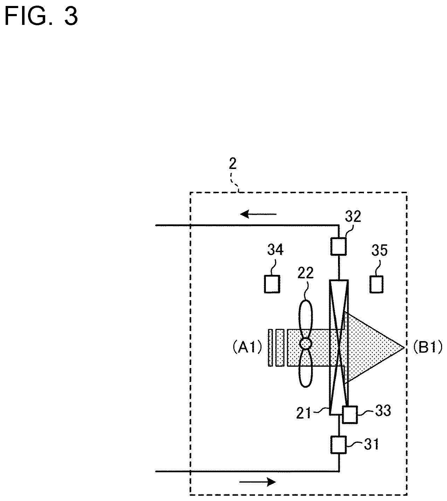

Fig. 3 is a diagram illustrating operation in the cooling operation of the indoor unit 2 according to Embodiment 1. In Fig. 3, the thin arrows indicate flows of the refrigerant and the thick arrow indicates a flow of air. The controller 5 is configured to set the opening degree of the expansion valve 14 to be small in the cooling operation. Thus, the pressure of the refrigerant flowing into the indoor heat exchanger 21 is reduced. In addition, the controller 5 is configured to control the opening degree of the expansion valve 14 so that a degree of superheat calculated from a difference between the inlet temperature of the refrigerant detected by the first temperature sensor 31 and the outlet temperature of the refrigerant detected by the second temperature sensor 32 reaches a predetermined value. As shown in Fig. 3, air (A1) in the air-conditioned space S is supplied, by the indoor fan 22, to the indoor heat exchanger 21 functioning as an evaporator. The indoor heat exchanger 21 cools the air passing therethrough. Then, air-conditioned air (B1) that has been cooled is supplied into the air-conditioned space S.

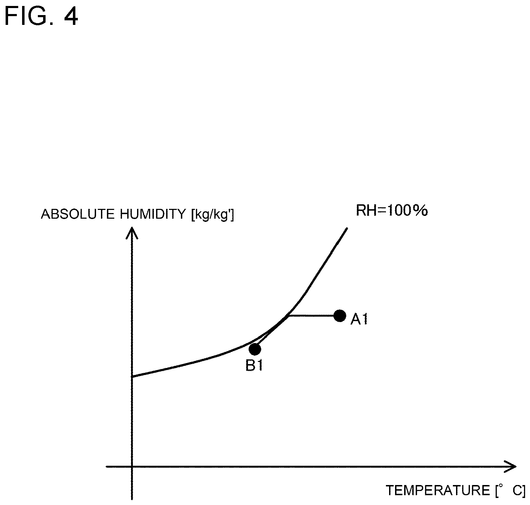

Fig. 4 is a psychrometric chart illustrating changes in air state in the cooling operation of the air-conditioning apparatus 100 according to Embodiment 1. The horizontal axis of Fig. 4 represents temperature [degrees C] and the vertical axis represents absolute humidity [kg/kg']. Point A1 and point B1 in Fig. 4 correspond to the locations (A1) and (B1) in Fig. 3, and indicate, respectively, the state of air at the location (A1) and the state of air at the location (B1). As shown in Fig. 4, the air (A1) passing through the indoor heat exchanger 21 is cooled and dehumidified through heat exchange with the refrigerant. After the air enters a low-temperature and high-relative humidity state, the air enters a state (B1) in which the absolute humidity is reduced, and then is supplied, as supply air, to the air-conditioned space S.

### (Heating Operation)

Now, the operation of the air-conditioning apparatus 100 in the heating operation is described. In the heating operation, the refrigerant that has been compressed by the compressor 11 and thus enters a high-temperature, high-pressure gas state flows into the indoor heat exchanger 21 functioning as a condenser. The refrigerant in a high-temperature, high-pressure gas state enters a liquid phase in the indoor heat exchanger 21 and heats the air passing through the indoor heat exchanger 21. Then, the pressure of the refrigerant is reduced by the expansion valve 14 whose opening degree is set small, and thus the refrigerant enters a two-phase state in which the refrigerant in a low-temperature, low-pressure liquid state and the refrigerant in a low-temperature, low-pressure gas state are mixed. Then, the refrigerant flows into the outdoor heat exchanger 13 functioning as an evaporator. In the outdoor heat exchanger 13, the refrigerant in a liquid state changes to a gas phase and cools the air passing through the outdoor heat exchanger 13. Then, the refrigerant flows into the compressor 11, and is compressed to a high-temperature, high-pressure gas state again.

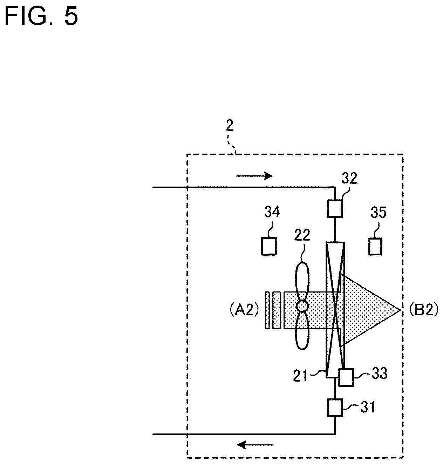

Fig. 5 is a diagram illustrating operation in the heating operation of the air-conditioning apparatus 100 according to Embodiment 1. In Fig. 5, the thin arrows indicate flows of the refrigerant and the thick arrow indicates a flow of air. The controller 5 is configured to set the opening degree of the expansion valve 14 to be small in the heating operation. Thus, the pressure of the refrigerant flowing into the outdoor heat exchanger 13 is reduced. In addition, the controller 5 is configured to control the opening degree of the expansion valve 14 so that a degree of superheat calculated from a difference between the outlet temperature of the refrigerant detected by the first temperature sensor 31 and the condensing temperature of the refrigerant detected by the third temperature sensor 33 reaches a predetermined value. As shown in Fig. 5, air (A2) in the air-conditioned space S is supplied, by the indoor fan 22, to the indoor heat exchanger 21 functioning as a condenser. The indoor heat exchanger 21 heats the air passing therethrough. Then, air-conditioned air (B2) that has been heated is supplied into the air-conditioned space S.

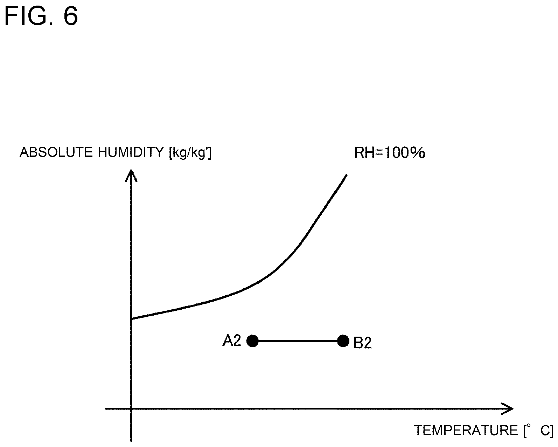

Fig. 6 is a psychrometric chart illustrating changes in air state in the heating operation of the air-conditioning apparatus 100 according to Embodiment 1. The horizontal axis of Fig. 6 represents temperature [degrees C] and the vertical axis represents absolute humidity [kg/kg']. Point A2 and point B2 in Fig. 6 correspond to the locations (A2) and (B2) in Fig. 5, and indicate, respectively, the state of air at the location (A2) and the state of air at the location (B2). As shown in Fig. 6, the air (A2) passing through the indoor heat exchanger 21 is heated through heat exchange with the refrigerant, enters a high-temperature state (B2), and then is supplied, as supply air, to the air-conditioned space S.

Next, the concept of control for achieving both controllability and a reduction in power consumption when the load of the air-conditioning apparatus 100 is small and the operation state of the air-conditioning apparatus 100 is in a low performance state will be described. Note that, unless specifically stated otherwise, a case of the cooling operation is described as an example in this specification.

The state where the operation state of the air-conditioning apparatus 100 is in a low performance state is specifically, for example, a state where the air-conditioning apparatus 100 is operating at, for example, 600 W, which is the minimum air-conditioning capacity for the air-conditioning apparatus 100. In other words, because the rated capacity of a general air-conditioning apparatus 100 is at least 2.2 kW, the low performance state is a state where the operation is performed at about 27% of the rated capacity. In this case, the low performance state means that the air-conditioning apparatus 100 is operating with "a cooling capacity or a heating capacity of 600 W or less" or with "a capacity of 30% or less with respect to the rated capacity of the air-conditioning apparatus 100". Hereinafter, a period when the air-conditioning apparatus 100 is in the low performance state is referred to as "low performance period".

During the low performance period, the rate of capacity change per 1 Hz of the compressor frequency is larger than that during a normal period, in which the air-conditioning apparatus 100 is in a normal state where the capacity is higher than the capacity in the low performance period. For example, in a case where the compressor is operated at 50 Hz during the normal period, the rate of the air-conditioning capacity change is 2% when the compressor frequency is changed by 1 Hz. In other words, when the compressor frequency is increased from 50 Hz to 51 Hz, the air-conditioning capacity is increased from X% to X plus 2%.

On the other hand, in a case where the compressor is operated at 10 Hz during the low performance period, the rate of the air-conditioning capacity change is 10% when the compressor frequency is changed by 1 Hz. In other words, when the compressor frequency is increased from 10 Hz to 11 Hz, the air-conditioning capacity is increased from Y% to Y plus 10%. As described above, the rate of the air-conditioning capacity change is large during the low performance period, compared with the normal period. Therefore, when the compressor frequency is changed during the low performance period at the same first control width ΔFn as that used during the normal period, the suction temperature is overshot. When an overshoot in which the suction temperature exceeds the set temperature and an overshoot in which the suction temperature falls below the set temperature are repeated, the suction temperature is fluctuated and a stable control in which the suction temperature is maintained at the set temperature cannot be performed.

In addition, when the indoor temperature reaches the thermo-off threshold due to too many overshoots, the compressor 11 is stopped. When the suction temperature rises due to the stop of the compressor 11 and reaches the thermo-on threshold, the compressor 11 is started again. That is, when the compressor frequency during the low performance period is changed at the same first control width ΔFn as that of the normal period, frequency of starting and stopping motions of the compressor 11 is increased.

Furthermore, a starting frequency at a thermo-on is higher than the compressor frequency at a thermo-off. Therefore, because the operation at a thermo-on requires a high compressor frequency, power consumption is increased, so that energy saving cannot be achieved. That is, when an overshoot occurs, the energy saving performance is reduced.

Thus, the air-conditioning apparatus 100 performs a low performance operation during the low performance period. The low performance operation is an operation in which a control width of the compressor frequency is reduced smaller than the first control width ΔFn, which is used in the normal operation performed during the normal period. That is, the air-conditioning apparatus 100 controls the compressor 11 by increasing or decreasing the compressor frequency at a second control width ΔFI1 that is smaller than the first control width ΔFn, and which is a control width of the compressor frequency determined based on the temperature difference ΔT between the suction temperature the set temperature. By performing the low performance operation during the low performance period, an overshoot can be prevented. As a result, frequency of starting and stopping motions of the compressor 11 can be reduced, and thus the power consumption can be reduced. Note that, as a specific control for reducing the control width smaller than that during the normal operation, a proportional-integral-derivative (PID) control may be used. With the PID control, the air-conditioning apparatus 100 reduces a proportional gain to 50% or less of the normal period.

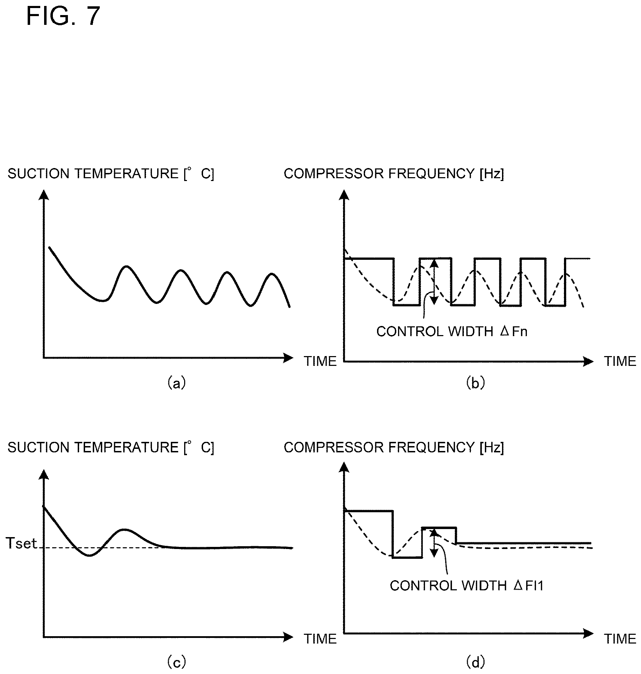

Fig. 7 is a diagram for explaining an effect of the low performance operation in the air-conditioning apparatus 100 according to Embodiment 1. Fig. 7(a) and Fig. 7(b) show operation patterns of a case where the first control width ΔFn is used during the low performance period. The horizontal axis of Fig. 7(a) represents time and the vertical axis represents suction temperature [degrees C]. The horizontal axis of Fig. 7(b) represents time and the vertical axis represents compressor frequency [Hz]. Fig. 7(c) and Fig. 7(d) show operation patterns of a case where the second control width ΔFI1 is used during the low performance period. The horizontal axis of Fig. 7(c) represents time and the vertical axis represents suction temperature [degrees C]. The horizontal axis of Fig. 7(d) represents time and the vertical axis represents compressor frequency [Hz]. Note that the dotted lines in Fig. 7(b) and Fig. (d) indicate suction temperatures.

As shown in Fig. 7(b), when the compressor frequency is changed at the first control width ΔFn of the normal period during the low performance period, a phenomenon of fluctuation of the suction temperature occurs, as shown in Fig. 7(a), because the first control width ΔFn is too large.

On the other hand, as shown in Fig. 7(d), when the compressor frequency is increased at the second control width ΔFI1, which is smaller than the first control width ΔFn, during the low performance period, the suction temperature changes as follows. The suction temperature gradually decreases as shown in Fig. 7(c), compared with the case of Fig. 7(a), and becomes stable at the set temperature Tset.

As described above, by performing the low performance operation during the low performance period, the air-conditioning apparatus 100 can prevent fluctuation and an overshoot of the suction temperature, thereby reducing power consumption.

Next, a case where the volume of air blown out from the air outlet 20b is relatively small during the low performance period will be considered. The case where the air volume is relatively small is, in particular, a case where the rotation speed of the indoor fan 22 is equal to or less than a fan rotation speed RPMset that has been set in advance. When the air volume is relatively small, short cycling as shown in Fig. 8 is caused.

Fig. 8 is a diagram for explaining short cycling. In Fig. 8, a wall-mounted type indoor unit 2 is shown. The air inlet 20a for sucking air into the housing 20 and the air outlet 20b for blowing out air into an indoor space are formed on the housing 20 of the indoor unit 2. Short cycling is a condition where air blown out from the air outlet 20b returns to the air inlet 20a when the volume of the air blown out from the air outlet 20b is small in a case where the air outlet 20b and the air inlet 20a are located close to each other on the indoor unit 2.

Such short cycling occurs not only with a wall-mounted type indoor unit 2 but also with a ceiling embedded type indoor unit that has an air inlet and an air outlet arranged close to each other, except where the positions of the air inlet and the air outlet can be changed by using a duct.

In this case, to obtain the same air-conditioning capacity during a high air volume period and a low air volume period, the blowout temperature of the air blowing out from the air outlet 20b needs to be lower during the low air volume period than during the high air volume period in the cooling period, and needs to be higher during the low air volume period than during the high air volume period in the heating operation. Consequently, in a case where the indoor temperature is detected by the suction temperature sensor 34 installed at the air inlet 20a, when short cycling occurs, the air-conditioning apparatus 100 may mistakenly detect the blowout temperature as the indoor temperature, and may mistakenly determine that the indoor temperature reaches the set temperature. As a result, there is a possibility that the air-conditioning apparatus 100 performs thermo-off. For this reason, when the operation state is in a low air volume state during the low performance period, the air-conditioning apparatus 100 performs a low-air-flow and low-performance operation. The low-air-flow and low-performance operation is an operation in which the compressor 11 is controlled at a third control width ΔFI2 that is smaller than the second control width AFI1 used in the low performance operation.

By performing the low-air-flow and low-performance operation to control the compressor 11 at the third control width ΔFI2, which is smaller than the second control width ΔFI1, a sudden change in the blowout air can be prevented. As a result, the air-conditioning apparatus 100 can reduce false detection of the indoor temperature caused by short cycling. As a specific control for the low-air-flow and low-performance operation, the air-conditioning apparatus 100 reduces a proportional gain to, for example, 30% or less of the normal period if the PID control is used.

In addition, to reduce thermo-off occurrences due to false detection of the indoor temperature caused by short cycling, a method is also effective in which the thermo-off threshold is changed for a predetermined period (for example, 5 minutes) from start of the low-air-flow and low-performance operation. More specifically, in a case of the cooling operation, by changing the thermo-off threshold that has been set to the set temperature minus 1 degree C for the normal operation, to the set temperature minus 2 degrees C, a thermo-off that occurs when short cycling occurs and the indoor temperature is mistakenly detected as a temperature lower than the actual indoor temperature can be prevented from occurring. In a case of the heating operation, by changing the thermo-off threshold that has been set to the set temperature plus 1 degree C for the normal operation, to the set temperature plus 2 degrees C, a thermo-off that occurs when short cycling occurs and the indoor temperature is mistakenly detected as a temperature higher than the actual indoor temperature can be prevented from occurring.

Thus, in addition to controlling the compressor 11 at the third control width ΔFI2, which is smaller than the second control width ΔFI1 in the low performance operation, the thermo-off threshold is changed for the abovementioned purpose to prevent thermo-off caused by short cycling in the low-air-flow and low-performance operation. That is, in the low-air-flow and low-performance operation, the air-conditioning apparatus 100 changes the thermo-off threshold such that a difference between the set temperature and the thermo-off threshold becomes larger than that in the normal operation. By changing the thermo-off condition in this manner, the air-conditioning apparatus 100 can prevent thermo-off from occurring even when a false detection of the indoor temperature occurs due to short cycling, and thus the controllability can be improved

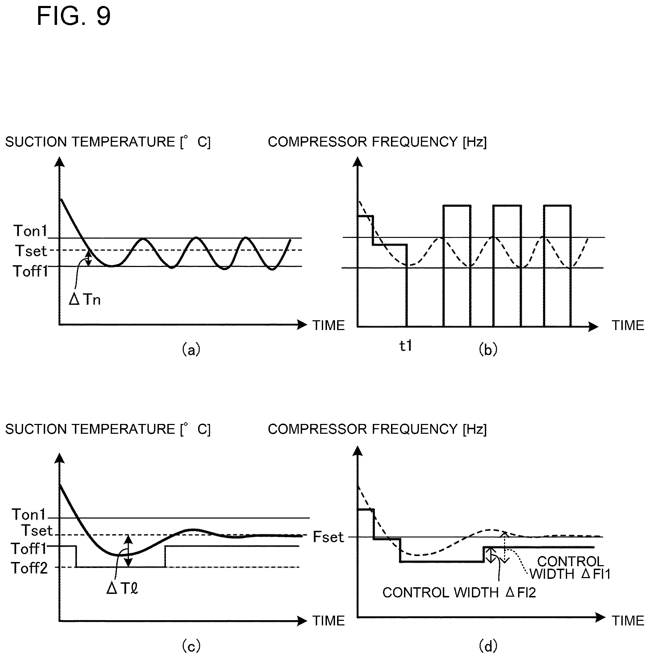

Fig. 9 is a diagram for explaining an effect of the low-air-flow and low-performance operation in the air-conditioning apparatus 100 according to Embodiment 1. Fig. 9(a) and Fig. 9(b) show operation patterns of a case where a thermo-off threshold Toff1 that is set for the normal operation period is used as the thermo-off threshold during the low-performance and low-air-flow period. The horizontal axis of Fig. 9(a) represents time and the vertical axis represents suction temperature [degrees C]. The horizontal axis of Fig. 9(b) represents time and the vertical axis represents compressor frequency [Hz]. Fig. 9(c) and Fig. 9(d) show operation patterns of a case where a thermo-off threshold Toff2 that is smaller than the thermo-off threshold Toff1 of the normal operation period is set during the low-performance and low-air-flow period. The horizontal axis of Fig. 9(c) represents time and the vertical axis represents suction temperature [degrees C]. The horizontal axis of Fig. 9(d) represents time and the vertical axis represents compressor frequency [Hz]. In addition, in Fig. 9(d), the control width ΔFI1 is represented as a dotted line for comparison with the control width ΔFI2.

In Fig. 9(a) and Fig. 9(c), the same thermo-on threshold Ton1 is used but the thermo-off thresholds are different. The thermo-off threshold Toff1 is used in Fig. 9(a) and the thermo-off threshold Toff2 is used in Fig. 9(c). By using a smaller thermo-off threshold as described above, the difference between the set temperature Tset and the thermo-off threshold is increased from ΔTn to ΔTI in Fig. 9(c). In addition, in Fig. 9(d), Fset represents a set frequency, which will be escribed later.

As shown in Fig. 9(a), in a case where the thermo-off threshold Toff1 of the normal operation period is used during the low-performance and low-air-flow period, once a sudden drop of the suction temperature is falsely detected due to short cycling, the suction temperature becomes more likely to reach the thermo-off threshold Toff1 . In this case, as shown in Fig. 9(b), the compressor 11 is thermo-off at time t1 and thermo-on and thermo-off are repeated after that, causing starting and stopping of the air-conditioning apparatus 100.

On the other hand, as shown in Fig. 9(c), the air-conditioning apparatus 100 uses the thermo-off threshold Toff2, which is smaller than the thermo-off threshold Toff1, as the thermo-off threshold during the low-performance low-air-flow period to increase the difference between the set temperature Tset and the thermo-off threshold from ΔTn to ΔTI. As a result, the air-conditioning apparatus 100 can avoid thermo-off, as shown in Fig. 9(d). That is, even when a sudden drop of the suction temperature due to short cycling is falsely detected, the suction temperature does not reach the thermo-off threshold Toff2, and thus thermo-off can be avoided.

Furthermore, in the low-air-flow and low-performance operation, by setting the control width of the compressor frequency to the control width ΔFI2, which is smaller than the control width ΔFI1, as shown in Fig. 9(d), the suction temperature gradually decreases and becomes stable at the set temperature Tset, as shown in Fig. 9(c).

In summary, the air-conditioning apparatus 100 performs the low performance operation when the air volume exceeds the set air volume during the low performance period, and performs the low-air-flow and low-performance operation when the air volume is equal to or less than the set air volume during the low performance period. More specifically, the air-conditioning apparatus 100 performs the low performance operation when the compressor frequency is equal to or smaller than the predetermined set frequency and the fan rotation speed exceeds the predetermined set rotation speed. The air-conditioning apparatus 100 performs the low-air-flow and low-performance operation when the compressor frequency is equal to or smaller than the set frequency and the fan rotation speed is equal to or smaller than the set rotation speed. Note that the air volume of the indoor fan 22 in the low-air-flow performance operation is not zero.

Furthermore, the low-performance operation is an operation in which the control width of the compressor frequency is set to the second control width ΔFI1, which is smaller than the first control width ΔFn of the normal operation. The low-air-flow and low-performance operation is an operation in which not only the control width of the compressor frequency is set to the third control width ΔFI2, which is smaller than the second control width ΔFI1 of the low performance operation but also the thermo-off threshold is changed such that the difference between the set temperature and the thermo-off threshold becomes larger than that in the normal operation.

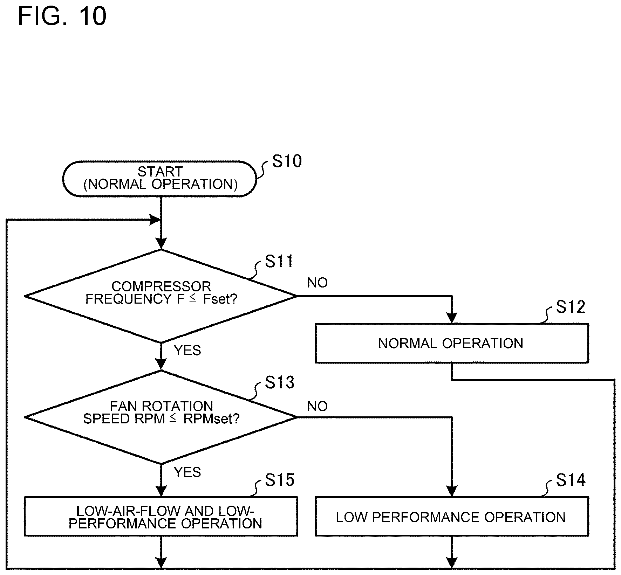

Fig. 10 is a flowchart illustrating transition from the normal operation to the low performance operation or the low-air-flow and low-performance operation in the air-conditioning apparatus 100 according to Embodiment 1. The flowchart of Fig. 10 is executed by the controller 5.

First, when the air-conditioning apparatus 100 is started, the controller 5 performs a normal operation of the cooling operation or the heating operation (step S10). In the normal operation, the controller 5 controls a compressor frequency F of the compressor 11 and the opening degree of the expansion valve 14 so that a suction temperature T reaches the set temperature Tset as described above. In addition, in the normal operation, the air volume control unit 52 controls a fan rotation speed RPM of the indoor fan 22 so that the air volume of the indoor fan 22 reaches the air volume set by a user via a remote controller or a predetermined air volume (for example, the maximum air volume).

Then, during the normal operation, the operation control unit 51 determines whether or not the compressor frequency F is equal to or smaller than the predetermined set frequency Fset (step S11). The set frequency Fset is, for example, the lower limit frequency of the compressor 11 plus 10 Hz. Note that the lower limit frequency is the minimum frequency for use required by the compressor 11 to safely operate without failure.

When it is determined that the compressor frequency F exceeds the set frequency Fset (NO in step S11), the operation control unit 51 continues the normal operation (step S12). Meanwhile, it is determined that the compressor frequency F is equal to or smaller than the set frequency Fset (YES in step S11), the operation control unit 51 determines whether or not the fan rotation speed RPM of the indoor fan 22 is equal to or smaller than the predetermined rotation speed threshold RPMset (step S13). The rotation speed threshold RPMset is, for example, 30% of the maximum rotation speed of the indoor fan 22. Note that the maximum rotation speed is the maximum rotation speed for use required by the indoor fan 22 to safely operate without failure.

When the fan rotation speed RPM exceeds the rotation speed threshold RPMset (NO in step S13), the operation control unit 51 shifts the operation from the normal operation to the low performance operation (step S14). Meanwhile, when the fan rotation speed RPM is equal to or smaller than the rotation speed threshold RPMset (YES in step S13), the operation control unit 51 shifts the operation from the normal operation to the low-air-flow and low-performance operation (step S15). Then, the air-conditioning apparatus 100 returns to step S11, and repeats the abovementioned operations.

Next, the control of the low performance operation for a case where the air volume is set to "automatic" will be described. In a case where the air volume is set to "automatic", the air-conditioning apparatus 100 controls the fan rotation speed RPM to automatically reduce the air volume when the operation is shifted from the normal operation to the low performance operation. As a result, an efficient operation can be achieved even during the low performance period. Now, how a coefficient of performance (COP) is improved by decreasing the air volume during the low performance period will be described.

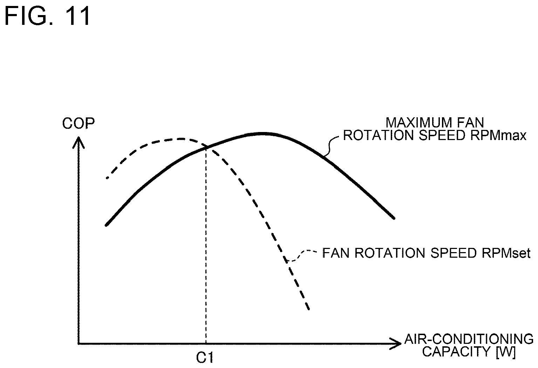

Fig. 11 is a diagram illustrating a relationship between air-conditioning capacity and equipment efficiency according to the fan rotation speed. The horizontal axis of Fig. 11 represents air-conditioning capacity [W], and the vertical axis represent COP. Fig. 11 shows the relationship between air-conditioning capacity and COP when the fan rotation speed is at the maximum RPMmax, and the relationship between air-conditioning capacity and COP when the fan rotation speed RPM is at RPMset. As shown in Fig. 11, under a condition that the air-conditioning capacity exceeds C1, the COP is higher for RPMmax than for RPMset. In other words, under a condition that the air-conditioning capacity is high, the COP is high when the air volume is large, compared with the case of a small air volume. This is because the effect of a rise in efficiency caused by reducing the difference between a high pressure and a low pressure in the refrigeration cycle when the volume of air sent to the indoor heat exchanger 21 is increased becomes larger than the effect of an increase in fan input.

Meanwhile, under a condition that the air-conditioning capacity is lower than C1, that is, under a condition that the compressor frequency is small, the COP is higher for RPMset than for RPMmax, as shown in Fig. 11. In other words, under a condition that the air-conditioning capacity is smaller than C1, the COP is high when the air volume is small, compared with the case of a large air volume. That is, a high COP can be obtained when the fan rotation speed RPM is set to a value equal to or smaller than RPMset during the low performance period.

This is because, when the compressor frequency F is small but the size of the indoor heat exchanger 21 is large enough, the difference between a high pressure and a low pressure of the refrigeration cycle is sufficiently reduced without increasing the air volume. Therefore, when the compressor frequency F is small, an effect of a rise in efficiency that can be obtained by increasing the air volume is small, but an energy-saving effect is increased by reducing the fan input by decreasing the air volume. That is, during the low performance period, when the air-conditioning capacity is equal to or lower than C1, the COP is high when the fan rotation speed RPM is small, compared with the case where the fan rotation speed RPM is large.

Therefore, in a case where the air volume has been set to "automatic", when the compressor frequency F falls to or below Fset, the air-conditioning apparatus 100 automatically reduces the fan rotation speed RPM to or below RPMset. That is, when, during the low-performance period, the air volume is set to "automatic", the air-conditioning apparatus 100 automatically shifts the operation from the low performance operation to the low-air-flow and low-performance operation. Thus, the air-conditioning apparatus 100 can achieve an efficient operation even during the low performance period.

Furthermore, regarding the situation of a sudden shift from the low performance operation to the normal operation, the controllability can be improved without any delay in reaching the set temperature when the control width of the compressor frequency F is controlled in the following way. The case of shift from the low performance operation to the normal operation corresponds to, for example, a case where the set temperature is changed from 27 degrees C to 20 degrees C in the cooling operation. In this case, by immediately changing the control width of the compressor frequency F back to the first control width ΔFn in the normal operation, the indoor temperature can reach the set temperature promptly.

Note that the air-conditioning apparatus 100 is not limited to the configuration shown in Fig. 1, and modifications can be made as follows without departing the scope of the present disclosure.

### (Modified Example 1)

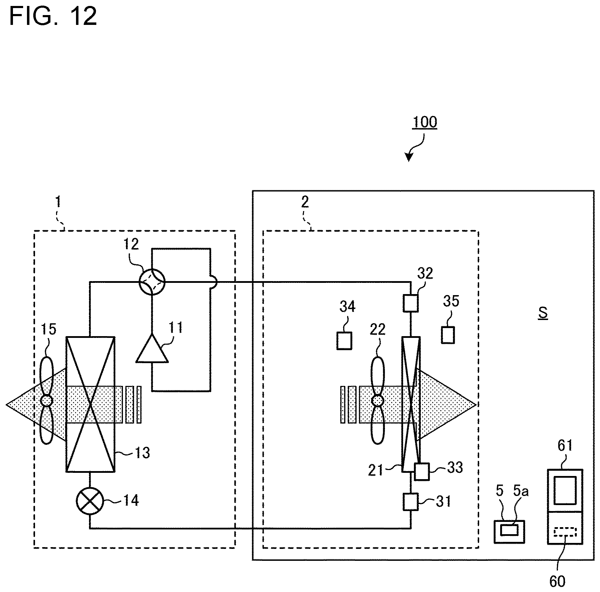

Fig. 12 is a diagram illustrating a schematic configuration of a modified example 1 of the air-conditioning apparatus 100 according to Embodiment 1. The air-conditioning apparatus 100 of the modified example 1 includes a second indoor temperature sensor 60 capable of detecting the indoor temperature of the air-conditioned space S, in addition to the suction temperature sensor 34. Although Fig. 12 shows a case where the second indoor temperature sensor 60 is provided at a remote controller 61 configured to operate the indoor unit 2, the second indoor temperature sensor 60 is not limited to a temperature sensor provided at the remote controller 61 but may be a radiation thermometer if the air-conditioning apparatus 100 includes the radiation thermometer. In short, the second indoor temperature sensor 60 is any sensor that is configured to detect the indoor temperature without being affected by short cycling.

The air-conditioning apparatus 100 is configured to control the compressor frequency F in conjunction with the suction temperature sensor 34 and the second indoor temperature sensor 60 in the low-air-flow and low-performance operation. The air-conditioning apparatus 100 is configured to compare the suction temperature detected by the suction temperature sensor 34 and the indoor temperature (hereinafter referred to as second indoor temperature) detected by the second indoor temperature sensor 60 in the low-air-flow and low-performance operation. The air-conditioning apparatus 100 is configured to, when a difference between the suction temperature and the second indoor temperature is generated, change the sensor for detecting the temperature to be used in the thermo-off determination from the suction temperature sensor 34 to the second indoor temperature sensor 60. As a result, the air-conditioning apparatus 100 can prevent thermo-off from occurring due to a false indoor temperature detection caused by short cycling. As a specific control, the air-conditioning apparatus 100 controls the compressor 11 based on the second indoor temperature when the difference in temperature between the suction temperature and the second indoor temperature is equal to or larger than a predetermined temperature difference threshold during the low-air-flow and low-performance operation.

Moreover, the controller 5 may be configured to perform a similar control by using a second indoor temperature sensor provided at another device, such as an air purifier, arranged in the air-conditioned space S, instead of using the second indoor temperature sensor 60 provided for the air-conditioning apparatus 100. In this case, the controller 5 is provided with a reception unit 5a configured to receive an indoor temperature detected by the second indoor temperature sensor provided at the another device. Then, when the difference in temperature between the indoor temperature detected by the suction temperature sensor 34 and the indoor temperature received by the reception unit 5a is equal to or larger than the predetermined temperature difference threshold, the controller 5 controls the compressor 11 by using the indoor temperature received by the reception unit 5a.

### (Modified Example 2)

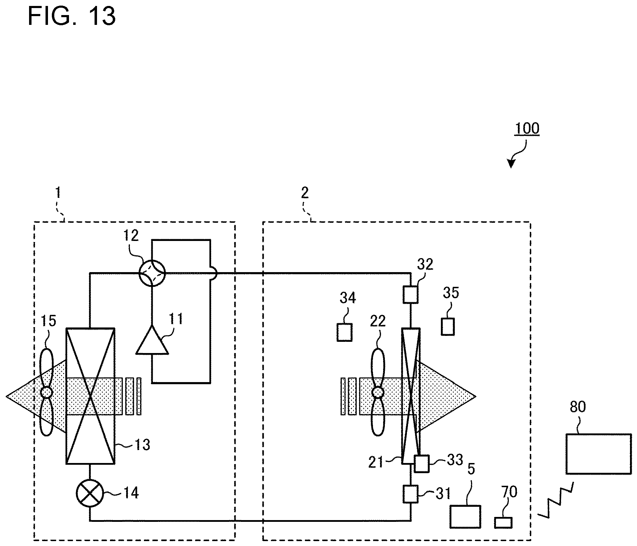

Fig. 13 is a diagram illustrating a schematic configuration of a modified example 2 of the air-conditioning apparatus 100 according to Embodiment 1. The air-conditioning apparatus 100 includes an external communication unit 70 capable of communicating with an external server 80. The optimum values for the control width, the thermo-off threshold, and the thermo-on threshold vary depending on not only setting information of equipment but also various information, such as a heat insulation property, airtightness, room arrangement, and installation position of the house, and the weather at the site. Thus, the controller 5 is configured to transmit a control information request including operation information of the air-conditioning apparatus 100 to the external server 80 in which these information are stored, via the external communication unit 70. The controller 5 is configured to perform control based on the control information received from the external server 80 via the external communication unit 70 in response to the control information request.

A calculation unit of the external server 80 is configured to, when the control information request is received, determine the optimum values for the control width, the thermo-off threshold, and the thermo-on threshold by learning by machine learning based on the operation information included in the control information request and the various information stored in the external server 80. The external server 80 is configured to transmit the learned result, as control information, to the air-conditioning apparatus 100. In this case, the operation information is, for example, a variation amount of the indoor temperature to the change amount of the compressor frequency for one control time interval. By learning influences of the weather, time zone, outdoor temperature on the variation amount of indoor temperature, the control width and other values can be set so that an excessive change in the indoor temperature is avoided.

The air-conditioning apparatus 100 is configured to change the control width, the thermo-off threshold, and the thermo-on threshold based on the received control information. Thus, the air-conditioning apparatus 100 can perform control considering the heat insulation property, airtightness, room arrangement, and installation position of the house and the weather at the site, and a further reduction in the power consumption can be expected

As described above, the air-conditioning apparatus 100 according to Embodiment 1 is arranged in the air-conditioned space S, and includes the indoor unit 2 having the indoor heat exchanger 21 and the indoor fan 22 configured to send air to the indoor heat exchanger 21, the outdoor unit 1 having the compressor 11, and an indoor temperature sensor configured to detect the indoor temperature of the air-conditioned space S. In addition, the air-conditioning apparatus 100 includes the controller 5 that is configured to perform control to increase or decrease the compressor frequency of the compressor 11 at the control width based on the difference between the indoor temperature detected by the indoor temperature sensor and the set temperature, and, when the compressor frequency exceeds the predetermined set frequency, perform the normal operation in which the compressor 11 is controlled by causing the control width to be the first control width. The controller 5 is configured to, when the compressor frequency is equal to or smaller than the set frequency and the rotation speed of the indoor fan exceeds the predetermined set rotation speed, perform the low performance operation in which the compressor is controlled by causing the control width to be the second control width, which is smaller than the first control width. The controller 5 is configured to, when the compressor frequency is equal to or smaller than the set frequency and the rotation speed of the indoor fan 22 is equal to or smaller than the set rotation speed, perform the low-air-flow and low-performance operation in which the compressor is controlled by causing the control width to be the third control width, which is smaller than the second control width.

With the abovementioned control, the air-conditioning apparatus 100 can prevent an overshoot and thus improve the controllability, and also can reduce the effect of short cycling on the controllability and thus prevent an increase in the power consumption caused by a frequent starting and stopping motions of the compressor 11. That is, the air-conditioning apparatus 100 can both improve the controllability and reduce the power consumption during the low performance period. In addition, the air-conditioning apparatus 100 can prevent the fluctuation of the indoor temperature due to a frequent starting and stopping motions of the compressor 11, and thus improve the comfortability. Furthermore, the air-conditioning apparatus 100 can stabilize the refrigeration cycle, and thus improve the comfortability.

The indoor temperature sensor is the suction temperature sensor 34 provided at the indoor unit 2 and configured to detect the suction temperature of the air sucked into the indoor unit 2. The controller 5 is configured to perform thermo-off to stop the compressor 11 when the suction temperature detected by the suction temperature sensor 34 reaches the thermo-off threshold and thermo-on to resume driving of the compressor 11 when the suction temperature reaches the thermo-on threshold, in the normal operation and in the low-air-flow and low-performance operation. The controller 5 is configured to change the thermo-off threshold for a certain time period after start of the low-air-flow and low-performance operation such that the difference between the set temperature and the thermo-off threshold becomes larger than that in the normal operation.

Thus, the air-conditioning apparatus 100 can prevent occurrence of thermo-off caused by a false detection of the indoor temperature due to short cycling.

The indoor temperature sensor is the suction temperature sensor 34 provided at the indoor unit 2 and configured to detect the suction temperature of the air sucked into the indoor unit 2. The air-conditioning apparatus 100 includes the second indoor temperature sensor 60 configured to detect the indoor temperature of the air-conditioned space S, in addition to the suction temperature sensor 34. The controller 5 is configured to, when the difference between the indoor temperature detected by the suction temperature sensor 34 and the indoor temperature detected by the second indoor temperature sensor 60 is equal to or larger than a predetermined temperature difference threshold during the low-air-flow and low-performance operation, control the compressor 11 by using the indoor temperature detected by the second indoor temperature sensor 60.

Thus, the air-conditioning apparatus 100 can prevent occurrence of thermo-off caused by a false detection of the indoor temperature due to short cycling.

The temperature sensor is the suction temperature sensor 34 provided at the indoor unit 2 and configured to detect the suction temperature of the air sucked into the indoor unit 2. The air-conditioning apparatus 100 includes the reception unit 5a configured to receive the indoor temperature of the air-conditioned space S detected by a second indoor temperature sensor provided at a device arranged in the air-conditioned space S. The controller 5 is configured to, when the difference between the indoor temperature detected by the suction temperature sensor 34 and the indoor temperature received by the reception unit 5a is equal to or larger than a predetermined temperature difference threshold during the low-air-flow and low-performance operation, control the compressor 11 by using the indoor temperature received by the reception unit 5a.

Thus, the air-conditioning apparatus 100 can prevent the occurrence of thermo-off caused by a false detection of the indoor temperature due to short cycling.

The air-conditioning apparatus 100 includes the external communication unit 70 that can communicate with the external server 80. The controller 5 is configured to transmit a control information request including operation information to the external server 80 via the external communication unit 70, and change the control width, the thermo-off threshold, and the thermo-on threshold based on the control information received from the external server 80 via the external communication unit 70 in response to the control information request.

Thus, the air-conditioning apparatus 100 can perform control based on the control width, the thermo-off threshold, and the thermo-on threshold in which various information stored in the external server 80 is considered, and thus a reduction in the power consumption can be expected.

### Embodiment 2

Embodiment 2 differs from Embodiment 1 in an operation content of the low-air-flow and low-performance operation. The control and configuration other than the operation content are the same as or equivalent to those of Embodiment 1. Features of Embodiment 2 will be described by focusing on differences from those of Embodiment 1. The features that are not described in Embodiment 2 are the same as those in Embodiment 1.

In the low-air-flow and low-performance operation in Embodiment 2, in addition to the low-air-volume and low-performance operation of Embodiment 1, control of the compressor frequency is performed at a time interval longer than that in the normal operation. As a specific control to make the time interval for the control of the compressor frequency longer than that in the normal operation, the air-conditioning apparatus 100 performs control to increase integration time, if the PID control is used. Note that the control time interval in the normal operation and the control time interval in the low performance operation are the same. Here, the control time interval is a period of time between an output of a control instruction for the compressor frequency from the controller 5 to the compressor 11 and a next output of a control instruction for the compressor frequency.

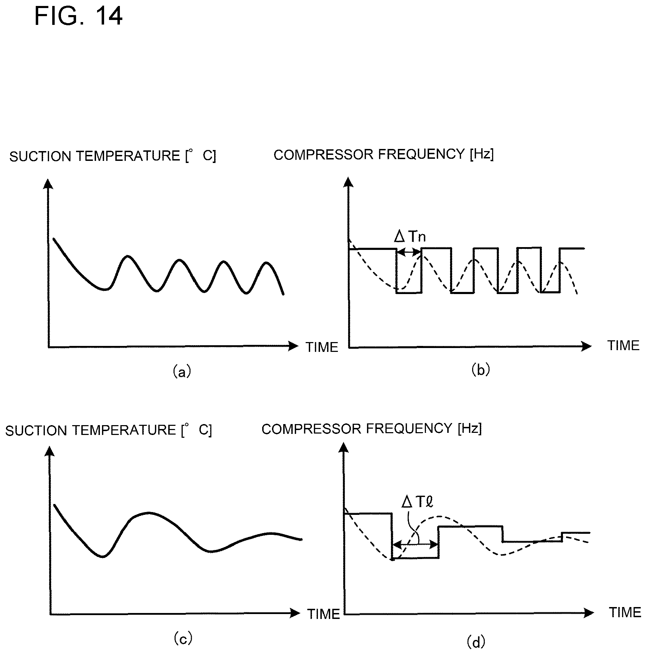

Fig. 14 is a diagram for explaining an effect of the low-air-flow and low-performance operation in the air-conditioning apparatus 100 according to Embodiment 2. Fig. 14(a) and Fig. 14(b) show operation patterns of a case where the control time interval of the compressor frequency is set to a control time interval Δtn of the normal operation during the low-air-flow and low-performance period. The horizontal axis of Fig. 14(a) represents time and the vertical axis represents suction temperature [degrees C]. The horizontal axis of Fig. 14(b) represents time and the vertical axis represents compressor frequency [Hz]. Fig. 14(c) and Fig. 14(d) show operation patterns of a case where the control time interval of the compressor frequency F is set to a control time interval Δtl that is longer than the control time interval Δtn of the normal operation during the low-air-flow and low-performance period. The horizontal axis of Fig. 14(c) represents time and the vertical axis represents suction temperature [degrees C]. The horizontal axis of Fig. 14(d) represents time and the vertical axis represents compressor frequency [Hz].

During the low performance period, the amount of change in the flow rate of the refrigerant when the compressor frequency is changed by 1 Hz is larger than that during the normal period, as with the case of the air-conditioning capacity. Therefore, the controllability is required also in the control of the opening degree of the expansion valve 14 during the low performance period. When the compressor frequency is changed, a change in a state of the refrigerant, such as a degree of superheat, a discharge temperature, of a degree of subcooling, actually occurs as the response after some delay. As a result, it takes time to change the refrigerant into an intended state. For this reason, when the compressor frequency is changed again at the next control timing based the control time interval Δtn shown in Fig. 14(b) before the refrigerant enters an intended state, the control of the expansion valve cannot follow the change. As a result, the suction temperature fluctuates as shown in Fig. 14(a), and thus the compressor frequency fluctuates as shown in Fig. 14(b).

On the other hand, when the control time interval is made longer from Δtn to Δtl as shown in Fig. 14(d), the control of the expansion valve can follow the change in the refrigerant state, and thus fluctuation in the suction temperature can be suppressed as shown in Fig. 14(c). As a result, fluctuation in the compressor frequency can be suppressed as shown in Fig. 14(d), and thus the compressor frequency becomes stable.

As described above, in the air-conditioning apparatus 100, by making the time interval for controlling the compressor frequency longer than that of the normal operation in the low-air-flow and low-performance operation, the controllability of the whole refrigerant cycle can be improved.

Furthermore, the modified example 2 of Embodiment 1 can be applied to Embodiment 2. That is, the air-conditioning apparatus 100 is configured to transmit a control information request including operation information to the external server 80 (see Fig. 13) in which various information are stored, via the external communication unit 70. The air-conditioning apparatus 100 is configured to perform control based on the control information received as a response to the control information request. The calculation unit of the external server 80 is configured to, when the control information request is received, determine the optimum value for the control time interval by learning by machine learning based on the operation information included in the control information request and the various information stored in the external server 80, and transmit the learned result to the air-conditioning apparatus 100. In this case, the operation information is, for example, a variation amount of the indoor temperature to the change amount of the compressor frequency for one control time interval. By learning influences of the weather, time of day, outdoor temperature on the variation amount of indoor temperature, the control time interval and other values can be set so that an excessive change in the indoor temperature is avoided.

The air-conditioning apparatus 100 is configured to change the control time interval based on the received control information. As a result, the air-conditioning apparatus 100 can perform control considering the heat insulation property, airtightness, room arrangement, and installation position of the house and the weather at the site, and thus a further reduction in the power consumption can be expected.

Although the embodiments have been described, the embodiments may be modified as described below. For example, although a combination of one indoor unit and one outdoor unit is used in the above embodiments, a combination of one outdoor unit and multiple indoor units, or one outdoor unit having two compressors may be used as a modification.

Furthermore, the specific values given for the set frequency Fset, the rotation speed threshold RPMset, and other set values in the above embodiments are only examples, and the set values may be set, as appropriate, according to the actual use conditions.

### Reference Signs List

1: outdoor unit, 2: indoor unit, 5: controller, 5a: reception unit, 11: compressor, 12: flow switching valve, 13: outdoor heat exchanger, 14: expansion valve, 15: outdoor fan, 20: housing, 20a: air inlet, 20b: air outlet, 21: indoor heat exchanger, 22: indoor fan, 23: airflow direction flap, 31: first temperature sensor, 32: second temperature sensor, 33: third temperature sensor, 34: suction temperature sensor, 35: blowout temperature sensor, 36: pipe, 51: operation control unit, 52: air volume control unit, 53: airflow direction control unit, 60: second indoor temperature sensor, 61: remote controller, 70: external communication unit, 80: external server, 100: air-conditioning apparatus

## Claims

1. An air-conditioning apparatus comprising:
an indoor unit being arranged in an air-conditioned space and including an indoor heat exchanger and an indoor fan sending air to the indoor heat exchanger;
an outdoor unit including a compressor;
an indoor temperature sensor configured to detect a temperature of the air-conditioned space; and
a controller configured to perform control to increase or decrease a compressor frequency of the compressor at a control width based on a difference between an indoor temperature detected by the indoor temperature sensor and a set temperature, and, when the compressor frequency exceeds a set frequency that has been set in advance, perform a normal operation in which the compressor is controlled by causing the control width to be a first control width, wherein
the controller performs, when the compressor frequency is equal to or smaller than the set frequency and a rotation speed of the indoor fan exceeds a set rotation speed that has been set in advance, a low performance operation in which the compressor is controlled by causing the control width to be a second control width that is smaller than the first control width, and when the compressor frequency is equal to or smaller than the set frequency and the rotation speed of the indoor fan is equal to or smaller than the set rotation speed, a low-air-flow and low-performance operation in which the compressor is controlled by causing the control width to be a third control width that is smaller than the second control width.

2. The air-conditioning apparatus of claim 1, wherein
the indoor temperature sensor is a suction temperature sensor provided at the indoor unit and configured to detect a suction temperature of air sucked into the indoor unit, and
the controller is configured to perform, when the suction temperature detected by the suction temperature sensor reaches a thermo-off threshold, thermo-off to stop the compressor, and when the suction temperature reaches a thermo-on threshold, thermo-on to resume driving of the compressor, in the normal operation and the low-air-flow and low-performance operation, and is configured to change the thermo-off threshold for a certain time period from start of the low-air-flow and low-performance operation such that a difference between the set temperature and the thermo-off threshold becomes larger than a difference between the set temperature and the thermo-off threshold of the normal operation.

3. The air-conditioning apparatus of claim 1, further comprising:
a second indoor temperature sensor configured to detect a temperature of the air-conditioned space,
wherein the indoor temperature sensor is a suction temperature sensor provided at the indoor unit and configured to detect a suction temperature of air sucked into the indoor unit, and
the controller is configured to, when a difference between an indoor temperature detected by the suction temperature sensor and an indoor temperature detected by the second indoor temperature sensor is equal to or larger than a temperature difference threshold that has been set in advance in the low-air-flow and low-performance operation, perform control of the compressor by using the indoor temperature detected by the second indoor temperature sensor.

4. The air-conditioning apparatus of claim 1, further comprising:
a reception unit configured to receive a temperature of the air-conditioned space detected by a second indoor temperature sensor provided at a device arranged in the air-conditioned space,
wherein the indoor temperature sensor is a suction temperature sensor provided at the indoor unit and configured to detect a suction temperature of air sucked into the indoor unit, and
the controller is configured to, when a difference between an indoor temperature detected by the suction temperature sensor and an indoor temperature received by the reception unit is equal to or larger than a temperature difference threshold that has been set in advance in the low-air-flow and low-performance operation, perform control of the compressor by using the indoor temperature received by the reception unit.

5. The air-conditioning apparatus of any one of claims 1 to 4, wherein
the controller is configured to make a control time interval of the compressor frequency in the low-air-flow and low-performance operation longer than a control time interval of the compressor frequency in the normal operation.

6. The air-conditioning apparatus of any one of claims 1 to 5, further comprising:
an external communication unit configured to communicate with an external server,
wherein the controller is configured to transmit a control information request including operation information to the external server via the external communication unit and change the control width based on control information received from the external server via the external communication unit as a response to the control information request.

7. The air-conditioning apparatus of claim 5 or 6 as dependent on claim 2, wherein
the controller is configured to change the thermo-off threshold and the thermo-on threshold based on the control information received via the external communication unit.

8. The air-conditioning apparatus of claim 6 or 7 as dependent on claim 5, wherein
the controller is configured to change the control time interval based on the control information received via the external communication unit.
